# EUROPEAN PATENT APPLICATION

(11) **EP 3 493 378 A1**
(43) Date of publication of application: **05.06.2019**
(21) Application number: 18206356.0
(22) Date of filing: 14.11.2018
(51) Int. Cl.: H02K 49/10

(54) **A MAGNETIC COUPLING ASSISTED DEVICE**

(30) Priority: 30.11.2017 TW 10641966
(71) Applicant: Yu, Neng-Tsai, 33454 Taoyuan City (TW)
(72) Inventor: Yu, Neng-Tsai, 33454 Taoyuan City (TW)
(74) Representative: Lang, Christian

(57) **Abstract**

A magnetic power assisted enhancing device having at least one power elevating module mainly comprising: a torque amplifying unit having a first mount body connected to a power transmission shaft and a second mount body, the first mount body and the second mount body being arranged with a plurality of first magnetic components and a plurality of second magnetic components respectively at intervals in ring configurations; a rotating shaft having an end connected to the second mount body; a first gear being arranged at the shaft. The first gear receiving power to make the second mount body going rotated as the first gear rotating, the second mount body and the first mount body make use the magnetic repulsion thrust force caused by the second magnetic component getting closed to the first magnetic component to increase the torque transmission in order to enhance the power outputted by the power transmission shaft.

## Description

### BACKGROUND

### 1. Technical Field

The present disclosure relates to a power enhancing device, in particular, to a magnetic power assisted enhancing device which utilizes a magnetic repulsion force to increase torque output in order to reduce the energy consumption.

### 2. Description of Related Art

Over using the earth resources not only depletes the environment and the energy in all perspective and causes great impact on human and live beings. What makes the people feel the most is the fluctuation of oil prices and the soaring prices of electricity, water and living expenses. Various data shows that people are feeling uneasy and helpless about future, and they are closely related to the impact caused by the energy depletion.

In order to solve the energy problems in the future, countries around the world are actively looking for alternative energy sources, or are committed to research and development to provide an equipment with low-power energy consumption but high-power transmission in order to contribute to the improvement of energy exhaustion. For example, if the transmission of a 100-horsepowers motor is equivalent to the power of a 200-horsepowers motor, the energy consumption can be reduced, and this is the very objective of the present disclosure.

### SUMMARY

In view of the above-mentioned problems of the prior art, the objective of the present disclosure is to provide a magnetic power assisted enhancing device that utilizes a magnetic repulsive thrust to increase the torque, thereby increasing the transmission power to reduce energy consumption.

According to the purpose of the present disclosure, a magnetic power assisted enhancing device is provided, including: a power transmission shaft which can be rotated after receiving power; a power transmission gear is arranged at a power transmission shaft and goes rotating as the power transmission shaft rotates to transmit power to an operating device; at least one power elevating module comprises a torque amplifying unit having a first mount body connected to the power transmission shaft and a second mount body, the first mount body and the second mount body are arranged with a plurality of first magnetic components and a plurality of second magnetic components in ring configuration at intervals. Each of the first magnetic components is respectively close to each of the second magnetic components and repels each other for having similar poles; a rotating shaft having an end connected to the second mount body; a first one-way rotating mechanism being pivotally joined to the rotating shaft, wherein the first one-way rotating mechanism may be a ratchet or a one-way bearing; a resilient component having an end connected to a second mounting body, the opposing end of the resilient component is connected to one side of the first one-way rotating mechanism; and a first gear is arranged at the rotating shaft and located on the other side of the first one-way rotating mechanism; and a driver module is a pivotally joined the first gear to drive the first gear go rotation.

From the above description, when the first gear receives the power of the driver module thereby rotates to make the rotating shaft and the second mount body rotate in motion, the second mount body may utilize the repulsion force of second magnetic components for having similar poles to push close to the first magnetic components such that the first mount body may rotate towards an identical direction. At this moment, the power transmission shaft may accord to the power of the driver module with the magnetic push force may rotate with a torque that is higher than the torque of rotating shaft according to the power of driver module and the magnetic thrust force, thereby the power transmitted by the power transmission gear is elevated to achieve the effect of a low horsepower motor but having a high transmission in order to lower the energy consumption.

According to the above feature, the second mount body is having a recess, a plurality of second magnetic components is arranged encircling the wall of the recess at intervals. The first mount body is correspondingly arranged in the recess and the each of the first magnetic components of the first mount body is arranged in displacement with respect to each of the corresponding second magnetic .

According to the above feature, the power elevating module further comprises a gap adjusting unit. The gap adjusting unit is having a pivot and spring. An end of the pivot is connected to the center of the plurality of first magnetic components of first mount body that are arranged in a circle. The spring is arranged in a slot of the center of the recess of the second mount body and an end is connected to the second mount body and an opposing end is connected to the pivot, wherein the pivot may be rotated to adjust the length to alter the spacing between the first mount body and the second mount body. The magnetic distance of the torque amplifying unit is kept by the gap adjusting unit to obtain the maximum conversion of the radial torque. In addition, the gap adjusting unit further prevents the mutual damaged caused the vibration while the two mount bodies of the torque amplifying unit are rotating.

According to the above feature, the power elevating module further comprises a rebound assisted unit and a mount. The rebound assisted unit comprises of a third mount body and a fourth mount body. The third mount body is connected to the rotating shaft to connect an opposing end of the second mount body. The fourth mount body is connected to the mount and having spacing between the third mount body, wherein the third mount body and the fourth mount body are arranged with an encircled of third magnetic component and an encircled fourth magnetic component respectively. The outer diameter of the third magnetic component is correspondingly approximate to the inner diameter of the fourth magnetic component and they are in similar pole and repelling to each other. The fourth mount body is connected to an adjustment screw and arranged with a fixed nut. By the repulsion force of the third magnetic component and the fourth magnetic component having similar poles, adjusting the amount of bias of the magnetic flux center thereof to make the third magnetic component is towards the direction of second mount body. This provides an axial magnetic push force to stabilize the magnetic flux center of the second magnetic component and the first magnetic component, wherein the radial magnetic repulsion force may be used as a replacement of traditional bearings. The advantage is the spacing between the two magnetic components obtains the effect of anti-shock, no abrasion and no heat generation under the effect of the radial magnetic repulsion force. This reduces the wear and tear of the parts and hence lower the costs of maintenance.

According to the above feature, the power elevating module further comprises a second one-way rotating mechanism that is pivotally joined rotating shaft and located at a place of the first gear that is relatively further away from the first one-way rotating mechanism.

According to the above feature, the first magnetic components, second magnetic components, third magnetic component and fourth magnetic component respectively are having a magnet, a thermal insulation layer encapsulates the magnet and a magnetic non-conductive casing encapsulates the thermal insulation layer. Thus, the magnet of each magnetic components is protected by the thermal insulation layer and the magnetic non-conductive casing. The magnetism deterioration of the magnet caused by high temperature environment may be prevented.

According to the above feature, the driver module comprises a motor, a power input gear arranged at the motor, a first flexibility transmission member with an end connected to the power input gear, a second gear connected to an opposing end of the first flexibility transmission member, a power input revolving axle for arranging the second gear, at least a third gear arranged at the power input revolving axle, at least one second flexibility transmission member, an end of the second flexibility transmission member is connected to the third gear and the opposing end is connected to the first gear.

According to the above feature, the driver module further comprises a plurality of first rotating mechanism pivotally joined the power input revolving axle.

According to the above feature, the quantity of power elevating module is preferably two. The first mount body that is comprised thereof is respectively connected to the two opposing ends of the power transmission shaft and the quantity of the third gear and second flexibility transmission member are correspondingly be two. Each third gear is arranged at the opposing two ends of the power input revolving axle and via each of second flexibility transmission members link to the first gear of each of the power elevating module.

According to the above feature, the magnetic power assisted enhancing device further comprises a plurality of second rotating mechanism that is pivotally joined the power transmission shaft and located at two sides of the power transmission gear respectively.

According to the above feature, the magnetic power assisted enhancing device further comprises a third flexibility transmission member, an end thereof is connected to the power transmission gear. The opposing end of the third flexibility transmission member is connected to a fourth gear of the operating device.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIG. 1 is a schematic diagram of a magnetic power assisted enhancing device of the present disclosure.
FIG. 2 is a schematic diagram of a part of the magnetic power assisted enhancing device of the present disclosure.
FIG. 3 is the first schematic diagram of the torque amplifying unit of the magnetic power assisted enhancing device of the present disclosure.
FIG. 4 is the second schematic diagram of the torque amplifying unit of the magnetic power assisted enhancing device of the present disclosure.
FIG. 5 is the schematic diagram of each magnetic component of the magnetic power assisted enhancing device of the present disclosure.

### DESCRIPTION OF THE EXEMPLARY EMBODIMENTS

To understand the technical features, content and advantages of the present disclosure and its efficacy, the present disclosure will be described in detail with references to the accompanying drawings. The drawings are for illustrative and auxiliary purposes only and may not necessarily be the true scale and precise configuration of the present disclosure. Therefore, the scope of the present disclosure should not be limited to and interpreted as the scale and configuration of the attached drawings.

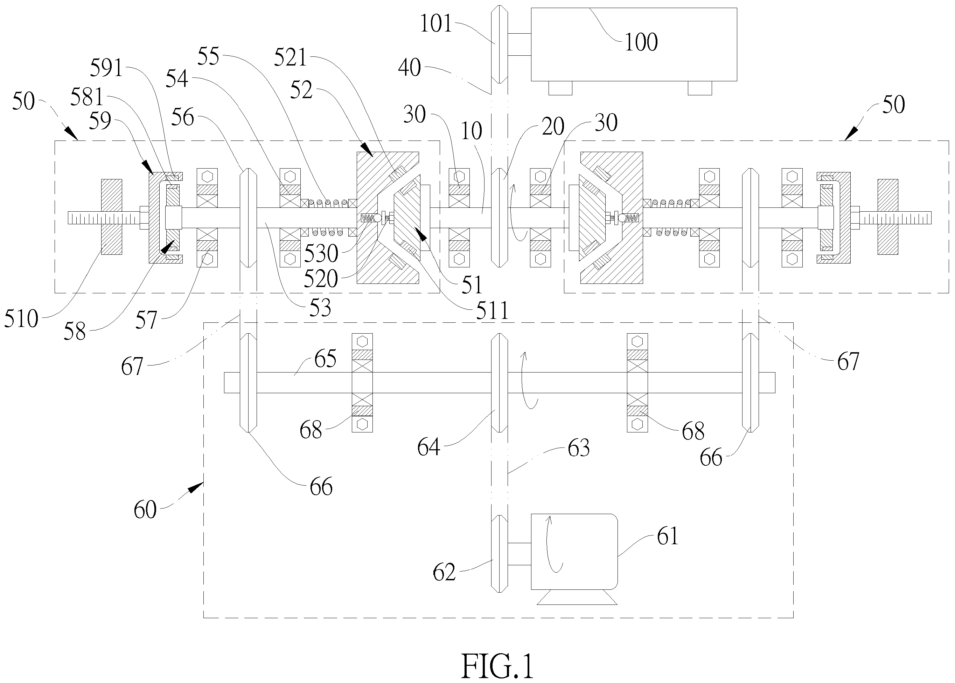

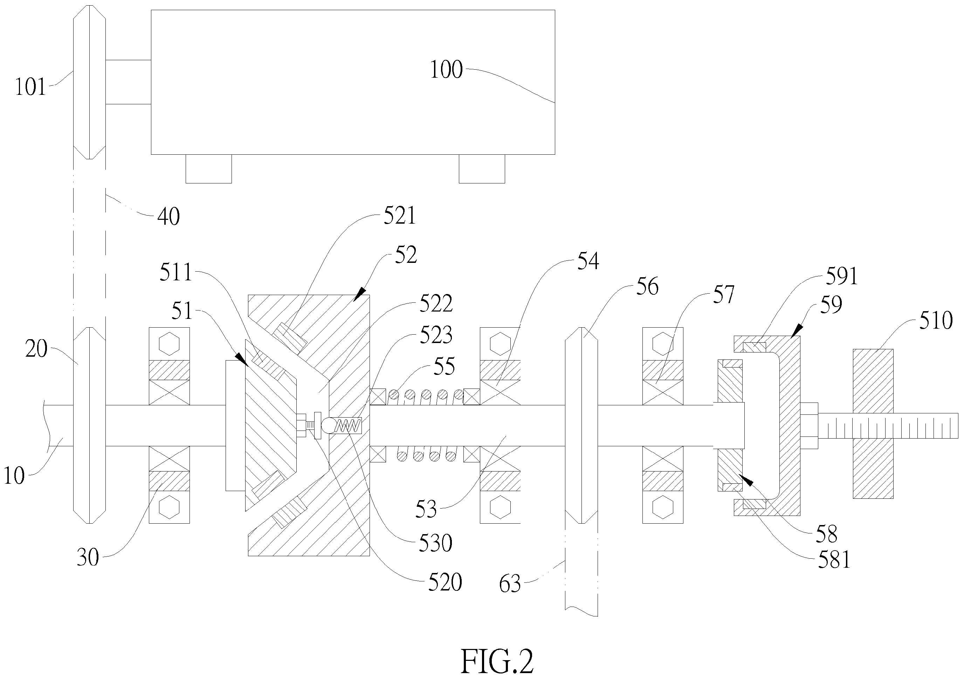

Referring to Fig.1 and Fig. 2, they are the schematic and partial schematic diagrams of the magnetic power assisted enhancing device of the present disclosure. As shown in the diagrams, the magnetic power assisted enhancing device of the present disclosure is including a power transmission shaft 10, a power transmission gear 20, a plurality of second rotating mechanism 30, a third flexibility transmission member 40, at least one power elevating module 50 and a driver module 60.

The power transmission gear 20 is disposed in the power transmission shaft 10; the plurality of second rotating mechanism 30 is pivotally joined the power transmission shaft 10 and are located on the two sides of the power transmission gear 20; an end of the third flexibility transmission member 40 is connected to the power transmission gear 20, the other end of the third flexibility transmission member 40 is connected to a fourth gear 101 of an operating, wherein the third flexibility transmission member 40 may be a chain, a belt, etc. The power elevating module 50 is linked to the power transmission shaft 10, preferably, the quantity of the power elevating module 50 may be two, and they are disposed at the two ends that were opposite to each other of the power transmission shaft 10. The driver module 60 is linked to the power elevating module 50. The objective of the present disclosure is the power elevating module 50 may utilize the magnetism to elevate the power and transmit the power to the power transmission shaft 10 when the driver module 60 provides power to the power elevating module 50 so that the torque of the power transmission shaft 10 is elevated and at the same time, the elevated power is transmitted to the operating device 100 via the third flexibility transmission member 40 while the power transmission gear 20 rotates along with the power transmission shaft 10. In this manner, the load of driver module 60 is lowered thereby decrease the consumption of the energy.

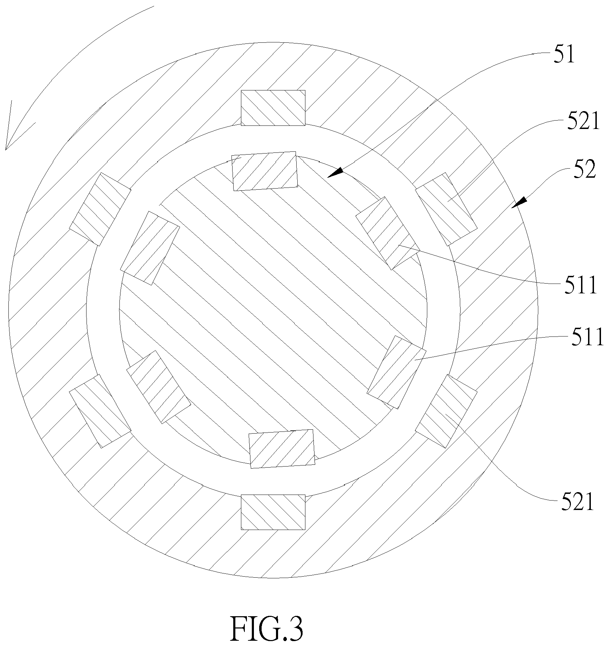

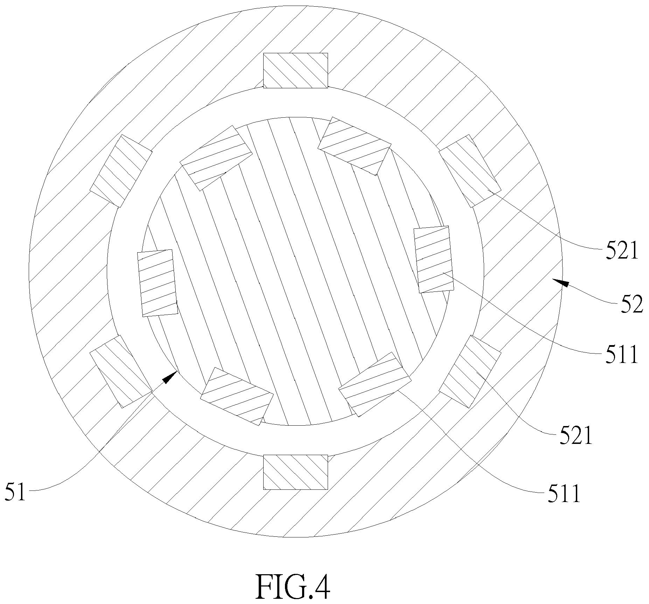

In details, the power elevating module 50 is mainly comprising a torque amplifying unit having a first mount body 51 and a second mount body 52, and a rotating shaft 53. The first mount body 51 is connected to the power transmission shaft 10. In the embodiment represented by the diagrams, the first mount body 51 of two power elevating module 50 are connected to the two ends of the power transmission shaft 10 and the second mount body 52 is connected to the rotating shaft 53 and configured at an interval with the first mount body, wherein the first mount body 51 and the second mount body 52 are configured with a plurality of first magnetic components 511 and a plurality of second magnetic components 521 respectively in rings at intervals. Each of the first magnetic components 511 is near to the corresponding second magnetic components 521 and they repel for having the same polarity. In a preferred embodiment, the second mount body 52 is having a recess 522, at the wall surface of the recess 522 is configured with a plurality of second magnetic components 521 in rings at interval. The first mount body 51 is correspondingly configured in the recess 522 and each of the first magnetic components 511 of the first mount body 51 is configured in displacement with each of second magnetic components 521 in correspondence. The relative positions of the first magnetic components 511 and the second magnetic components while the first magnetic components 511 of the first mount body 51 and the second magnetic components 521 of the second mount body 52 is rotating is shown in Fig. 3. The technical feature for accomplishing the main objective of the present disclosure is while the rotating shaft 53 is being driven thus rotates to make the second mount body 52 rotates in motion thereby, the second mount body 52 may utilize the magnetic repulsive force of second magnetic components 521 to push close to the first magnetic components 511. The relative position of the first magnetic components 511 and the second magnetic components 521 while first magnetic components 511 of the first mount body 51 and the second magnetic components 521 of the second mount body 52 are stationary is shown in Fig. 4. When the first mount body 51 is able to rotate in the same direction, at this moment, the power transmission shaft 10 may be rotated according to the power provided by the driver module 60 and in addition to the magnetic thrust to rotate with the torque that is more than torque of the rotating shaft 53. In this way, the power transmitted by the power transmission gear 20 is elevated and thereby reduces the use energy.

In the above descriptions, the power elevating module 50 further comprises a gap adjusting unit, it is arranged between the first mount body 51 and second mount body 52, wherein the gap adjusting unit is having a pivot 520 and a spring 530. An of the pivot 520 is connected to the center of the plurality of first magnetic components 511 configured in rings of the first mount body 51. The spring 530 is arranged at a slot 523 in the center of the recess 522 of the second mount body and an end of the spring 530 is connected to the second mount body 52, the opposing end of the spring 530 is connected to the pivot 520. The purpose of arranging the gap adjusting unit is for the length of the pivot 520 may be adjusted by rotation to alter the distance between the first mount body 51 and the second mount body 52. In this way, when the distance between the first mount body 51 and the second mount body 52 is altered due to the rotary motion, the magnetic center of the torque amplifying unit is maintained by making adjustment via the gap adjusting unit thereby obtaining the maximum torque conversion. Furthermore, the gap adjusting unit may also prevent the first mount body 51 and the second mount body 52 of the torque amplifying unit generating vibration during the rotation thus have an anti-shock effect to increase the lifetime of all parts.

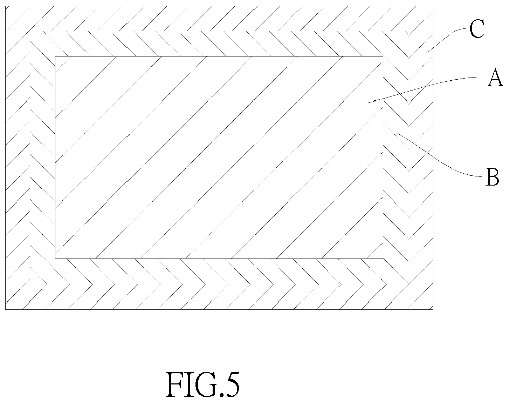

In the above descriptions, other than the torque amplifying unit, rotating shaft 53 and the gap adjusting unit, the overall structure of the power elevating module 50 also comprises a first one-way rotating mechanism 54, a resilient component 55, a first gear 56, a second one-way rotating mechanism 57, a rebound assisted unit having a third mount body 58 and a fourth mount body 59 and a mount 510. The first one-way rotating mechanism 54 is mutually rotated along with the rotating shaft 53. An end of the resilient component 55 is connected to the second mount body 52. The other opposing end of the resilient component 55 is connected to an end of the first one-way rotating mechanism 54. The first gear 56 is mutually rotated along with the rotating shaft 53 and located at the other side of the first one-way rotating mechanism 54. Furthermore, the first gear 56 is pivotally joined to the driver module 60. Due to magnetism of the second mount body 52 repels to the magnetism of the first mount body, counter force is generated thereby. Therefore, the present disclosure cleverly arranged the first one-way rotating mechanism 54 to counteract the counter force. This makes the rotating shaft 53 is able to rotate towards the pre-determined rotation direction continuously and stably. The second one-way rotating mechanism 57 is pivotally joined the rotating shaft 53 and is located at the place of the first one-way rotating mechanism 54 that is relatively further from the first gear 56. The third mount body 58 of the rebound assisted unit is connected to the rotating shaft 53 for connecting the relatively opposing end of the second mount body 52. The fourth mount body 59 of is connected to the mount 510 and having spacing between the third mount body 58. The third mount body 58 and the fourth mount body 59 are respectively arranged with encircled third magnetic components 581 and encircled fourth magnetic components 591. The outer diameter of the third magnetic components is correspondingly close to the internal diameter of the fourth magnetic components 591 and they are repelling to each other for having the same polarity. The fourth mount body 59 connects to an adjusting screw (not shown) and being arranged with a fixing nut (not shown). Via the repelling force due to the third magnetic components 581 and the fourth magnetic components 591 having the same polarity, adjusting the bias of the central flux such that the third magnetic component 581 is towards the second mount body 52 and provides an axial magnetic push force to stabilize the central flux of the second magnetic components 521 and the first magnetic components 511 wherein the radial magnetic repulsive force may also replace the conventional bearings. The advantage is the spacing between the two magnetic components may obtain the anti-shock effect under the radial magnetic repulsive force and there is no abrasion and heat generation. It reduces the wear and tear of the parts and lower the maintenance costs. In the above descriptions, resilient component 55 may be a spring preferably. The first magnetic components 511, second magnetic components 521, third magnetic components 581 and fourth magnetic components 591 respectively comprise of a magnet A, a thermal insulation layer B and a magnetic non-conductive casing C. The thermal insulation layer B encapsulates the magnet A and the magnetic non-conductive casing C encapsulates the thermal insulation layer B. As shown in Fig. 5, wherein the thermal insulation layer B is made preferably from materials such as insulation cotton, Styrofoam, foam. Each of the magnetic component of the present disclosure utilizes the thermal insulation layer B and a magnetic non-conductive casing C to protect the magnet A configured in the inner layer. The magnetism decay of the magnet A due to the rise in temperature during rotation may be prevented.

For the driver module 60 of the embodiments shown in the figures, it comprises a motor 61, a power input gear 62, a first flexibility transmission member 63, a second gear 64, a power input revolving axle 65, two third gears 66, two second flexibility transmission members 67 and two first rotating mechanism 68. The power input gear 62 is arranged in the motor 61. Two ends of the first flexibility transmission member 63 are respectively connected to the power input gear 62 and the second gear 64 and the second gear 64 is arranged at the power input revolving axle 65. Two third gears 66 are arranged at the power input revolving axle 65. To be precise, each of the third gears 66 is arranged at the two opposing ends of the power input revolving axle 65. One of the ends of each of the second flexibility transmission members 67 is respectively connected the third gears 66 and the opposing end of each of the second flexibility transmission members 67 is connected to the first gear 56 of the power elevating module 50. Each of the first rotating mechanisms 68 are pivotally joined the power input revolving axle 65 and are arranged at two sides of the second gear 64. While in operation, motor 61 may provide power and via power input gear 62 and first flexibility transmission member 63, the power is transmitted to second gear 64 to make the power input revolving axle 65 may rotate with the third gear 66 that is driven by the second gear 64. Therefore, the power is transmitted to the first gear 56 of the power elevating module 50 via the second flexibility transmission member 67. Furthermore, due to the resilient component 55 is arranged between the second mount body 52 and first one-way rotating mechanism 54, the effect of this arrangement is to buffer and offset the rebound force generated by the magnetic repulsive force of the second mount body 52 and the first mount body 51 by the elastic restoring force of the resilient component 55, thereby avoiding the detachment condition between the first gear 56 and the second flexibility transmission member 67 that occurs during the transmission of the power. Furthermore, the resilient component 55 stabilizes the left and right displacement phenomenon of the rotating shaft 53 during operation, so when the driver module 60 is inputting power to the power elevating module 50, it can transmit the maximum one-way power without generating left and right displacements and without the reduction in the transmitted power to the operating device 100 caused by the left and right displacements.

To sum up, the magnetic power assisted enhancing device of the present disclosure utilizes the way of the counter force being counteracted from magnetic repulsion repels the one-way rotation structure to convert little power to big power. Under the breakthrough of the prior art, it has indeed achieved the effect of saving energy and it is not obvious for people skilled in the art to think of. Furthermore, the magnetic power assisted enhancing device of the present disclosure is not anticipated and obtained by the prior art, and the present disclosure complies with the provision of the patent act. The present disclosure is applied according to the patent act, and the examination and allowance requests are solicited respectfully.

The above-mentioned descriptions represent merely the exemplary embodiment of the present disclosure, without any intention to limit the scope of the present disclosure thereto. Various equivalent changes, alternations or modifications based on the claims of present disclosure are all consequently viewed as being embraced by the scope of the present disclosure.

## Claims

1. A magnetic power assisted enhancing device, comprises:
a power transmission shaft (10) being rotated after receiving power;
a power transmission gear (20) being arranged at the power transmission shaft (10) and rotating as the power transmission shaft (10) being rotated to transmit power to an operating device (100);
at least one power elevating module (50), mainly comprising:
a torque amplifying unit having a first mount body (51) connected to the power transmission shaft (10) and a second mount body (52), the first mount body (51) and the second mount body (52) being arranged with a plurality of first magnetic components (511) and a plurality of second magnetic components (521) respectively at intervals in ring configurations, each first magnetic components (511) respectively being close to each corresponding second magnetic components (521) and repelling each other for having similar poles;
a rotating shaft (53) having an end connected to the second mount body (52);
a first one-way rotating mechanism (54) being mutual axially rotated with the rotating shaft (53);
a resilient component (55), an end being connected to the second mount body (52) thereof, the other opposing end of the resilient component (55) being connected to a side of the first one-way rotating mechanism (54); and
a first gear (56) being mutual axially rotated with the rotating shaft (53) and being located at the other side of the first one-way rotating mechanism (54); and
a driver module (60) being pivotally joined the first gear (56) to drive the first gear (56) into rotation.

2. The magnetic power assisted enhancing device according to claim 1, wherein the second mount body (52) is having a recess (522); on the wall surface of the recess (522) is configured with the plurality of second magnetic components (521) at interval in ring arrangements; the first mount body (51) is arranged in the recess (522) correspondingly; and each of the first magnetic components (511) is configured corresponding to each of the second magnetic components (521) with slight displacement bias.

3. The magnetic power assisted enhancing device according to claim 2, wherein the power elevating module (50) further comprises a gap adjusting unit, the gap adjusting unit is having a pivot (520) and a spring (530), an end of the pivot (520) is connected to a center of the first magnetic component (511) configured in ring of the first mount body (51); the spring(530) is arranged in a slot (523) of the center of the recess (522) of the second mount body (52); and an end of the spring (530) is connected to the second mount body (52), an opposing end of the spring (530) is connected to the pivot (520); wherein the pivot (520) being able to rotate to adjust a length to alter a spacing between the first mount body (51) and the second mount body (52).

4. The magnetic power assisted enhancing device according to claim 3, wherein the power elevating module (50) further comprises a rebound assisted unit and a mount (510), the rebound assisted unit comprises of a third mount body (58) and a fourth mount body (59), the third mount body(58) is connected to the rotating shaft (53) for connecting another opposing end of the second mount body (52); the fourth mount body (59) is connected to the mount (510) and having a spacing with the third mount body (58); wherein the third mount body (58) and the fourth mount body (59) respectively arranged with a third magnetic component (581) and fourth magnetic component (591) in encircled configuration, the third magnetic component (581) is respectively near to the corresponding fourth magnetic component (591) and having similar poles.

5. The magnetic power assisted enhancing device according to claim 4, wherein the power elevating module (50) further comprises a second one-way rotating mechanism (57) that is pivotally joined the rotating shaft (53) and located at a place of the first one-way rotating mechanism (54) that is relatively farther away from the first gear (56).

6. The magnetic power assisted enhancing device according to claim 4, wherein the first magnetic component (511), the second magnetic components (521), the third magnetic component (581) and the fourth magnetic component (591) respectively comprises a magnet (A); a thermal insulation layer (B) encapsulating the magnet (A); and a magnetic non-conductive casing (C) encapsulating the thermal insulation layer (B).

7. The magnetic power assisted enhancing device according to claim 1, wherein the driver module (60) comprises: a motor (61); a power input gear (62) arranged at the motor (61); a first flexibility transmission member (63) having an end connected to the power input gear (62); a second gear (64) being connected to another opposing end of the first flexibility transmission member (63); a power input revolving axle (65) for arranging the second gear (64); at least one third gear (66) being arranged at the power input revolving axle (65); and at least one second flexibility transmission member (67) having an end connected to the third gear (66) and another opposing end connected to the first gear (56).

8. The magnetic power assisted enhancing device according to claim 7, wherein the driver module (60) further comprises a plurality of first rotating mechanisms (68) pivotally joined the power input revolving axle (65).

9. The magnetic power assisted enhancing device according to claim 7, wherein quantity of the power elevating module (50) is two, the first mount body (51) comprised thereof connects to two opposing ends of the power transmission shaft (10) and correspondingly the quantity of the third gear (66) and the second flexibility transmission member (67) are two respectively; each of the third gear (66) is arranged at the two opposing ends of the power input revolving axle (65) and via each of the second flexibility transmission member (67) linking to each of the first gear (56) of the power elevating module (50).

10. The magnetic power assisted enhancing device according to claim 7, further comprises a plurality of second rotating mechanisms (30) being pivotally joined the power transmission shaft (10) and located at two sides of the power transmission gear (20) respectively.

11. The magnetic power assisted enhancing device according to claim 10, further comprises a third flexibility transmission member (40), an end of the third flexibility transmission member (40) being connected to the power transmission gear (20), another opposing end of the third flexibility transmission member (40) being connected to a fourth gear (101) of the operating device (100).
